Europäisches Patentamt

(19) European Patent Office

Office européen des brevets

(11) Publication number: **0 109 359**
**A1**

(12) # EUROPEAN PATENT APPLICATION

(21) Application number: **83810506.2**

(22) Date of filing: **03.11.83**

(51) Int. Cl.³: **A 61 C 15/00**

(30) Priority: **15.11.82 CH 6633/82**
**29.09.83 CH 5270/83**

(43) Date of publication of application: **23.05.84**
**Bulletin 84/21**

(84) Designated Contracting States: **AT BE DE FR GB IT LU NL SE**

(71) Applicant: **Hawe-Neos Dental Dr. H. von Weissenfluh S.A., CH-6925 Gentilino (CH)**

(72) Inventor: **Von Weissenfluh, Beat, Casa Zarament, CH-6925 Gentilino (CH)**

(74) Representative: **Baggiolini, Raimondo et al, Racheli & Fiammenghi Via San Gottardo 15, CH-6900 Lugano (CH)**

(54) **Improved toothpick.**

㊼ The toothpick of the invention is shaped to reproduce faithfully the shape of the interstices between the teeth at the base of the teeth. For this purpose, it exhibits substantially trapezoidal sections decreasing toward the tip, with tapering curved sides. The upper front part (B, E, F) is concave and the lower front part (G, H, B) is curved upward.

The base of the tip (HB) is impregnated with antiplaque, antibacterial and scented substances, while the sides (1') are coated with a toothpaste with a base of fluorine and a slight abrasive.

The entire unit is protected by a film that is removed mechanically and by the action of saliva when the toothpick is inserted in the interstices between the teeth.

The toothpick not only makes possible the removal of residue bodies from mastication, inserted in the interstices between the teeth, but especially removal of bacterial plaque and tartar with the deposition of antiplaque substances, as also brushing of the teeth and administration of fluorine, thus impeding caries.

- 1 -             0109359

Improved toothpick

This invention has as its object an improved toothpick that makes possible the perfect cleaning of the interstices between the teeth, makes it possible to remove bacterial plaque and tartar that form mainly on the approximal surfaces of the teeth, a zone that other oral cleaning instruments have difficulty reaching, promotes administration of fluorine at the neck of the teeth, brushes them and finally aids in scenting the breath.

Its action is very important especially in removing bacterial plaque and tartar that preferably form on the approximal surfaces and in the vicinity of the gums and cover the enamel, giving raise to caries and inflammation of the gums, with resulting pyorrhea and loss of teeth.

Normal toothpicks, as is known, consist of small wooden sticks or small plastic tubes sharpened at one or both ends to remove foreign substances trapped between the teeth during mastication, are generally not very effective in removing bacterial plaque. This is due to their shape that is poorly suited to the interdental geometry.

The improved toothpick of the invention perfectly solves the problems mentioned above by having its tip shaped to reproduce faithfully the shape of the interstices between the teeth.

It is characterized by the characterizing part of claim 1.

According to a preferred embodiment, the toothpick of the invention is characterized by a section that is rectangu-

0109359

lar in its back part, while it changes into substantially trapezoidal sections decreasing, with curved sides, toward the tip.

Moreover, its upper front part is concave, while the lower part is curved upward.

The accompanying drawings represent the preferred embodiment above.

Figure 1 shows the front part of the toothpick of the invention in a top view.

Figure 2 shows the corresponding side view.

Figure 3 shows a plan view of figure 1 from the tip.

Figure 4 shows a cross section of figure 2 made along an orthogonal plane going through IV-IV.

Figure 5 shows the front view of the canine and molar teeth on a scale larger than actual size.

Figure 6 shows the corresponding longitudinal section at the median plane.

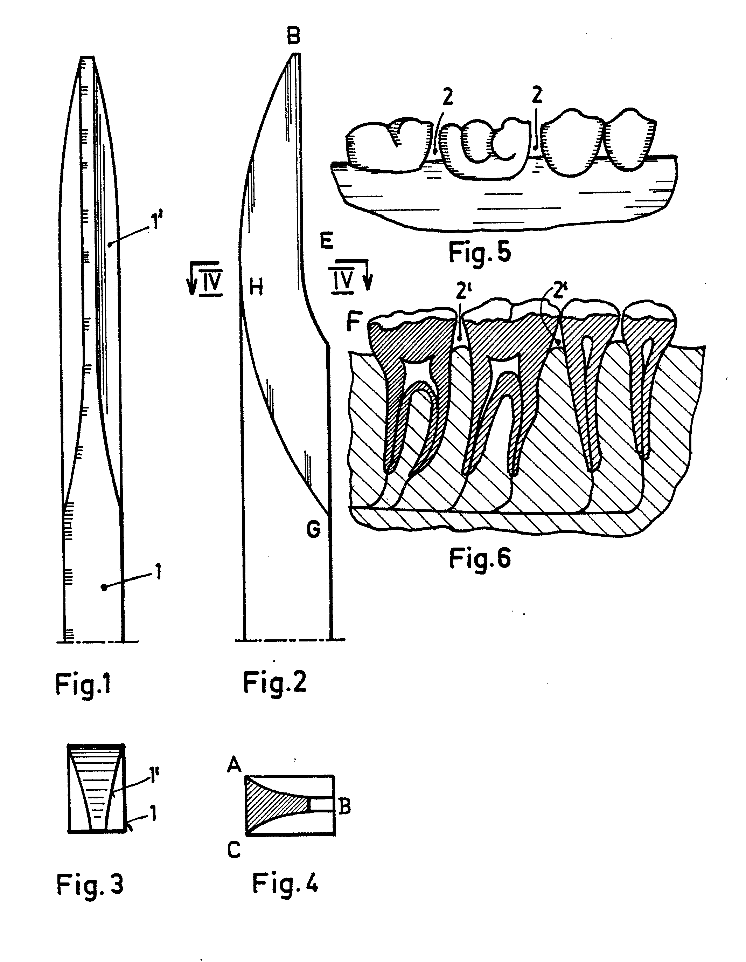

The toothbrush shown in Figures 1, 2, 3, 4 exhibits back part 1 of rectangular section and front part 1' (figures 1 and 2) so as gradually to change into substantially trapezoidal sections (see figure 4) decreasing toward the tip, and with larger sides, i.e. with curved line sides AB and BC (figure 4).

Upper front part B, E, F (figure 2) at vertices B of the

0109359

triangles (figure 4) is concave, while the lower front part G, H, B is curved upward.

In this way the front end of the toothpick perfectly reproduces the sections of interstices 2, 2 (figure 5) between the teeth.

Considering that said triangular interstices 2, 2 diminish in section in the median plane of the teeth, as shown by 2' 2' in figure 6, it is immediately clear that the tapering of the front part of the toothpick of the invention makes it possible to insert it perfectly in the entire depth of said interstices, removing not only foreign bodies due to mastication but also and especially bacterial plaque and tartar that normally form on the approximal surfaces and which, besides causing caries and gengivitis, during brushing of the teeth prevents the medicinal substance contained in the dentifrices (fluorine and mineral salts) from penetrating into the enamel at the base of the teeth to prevent caries.

Still according to the invention, at least the lower part AC (figure 4) along curved section HB (figure 2) is coated, or better, is impregnated with scenting medicinal, antiplaque and disinfectant substances able to prevent the formation of tartar, while the sides AB and CB (fig 4) are coated or impregnated with a dentifrice containing fluorine and a slight abrasive.

The entire unit is covered with a protective film so that upon introduction of the tip of the toothpick in interstices 2, 2' (figures 5 and 6) between the teeth and with the aid of saliva, it is removed, allowing the scenting and medicinal substances placed at base AC (HB) to be deposi-

- 4 -

0109359

ted on the gums and at the base of the teeth to remove bacterial plaque and tartar, while the substances deposited on the sides (AB, CB, figure 4) brush the neck of the teeth and permit the administration of the fluorine.

The process for treating the toothpicks of the invention, after having given them the shape described above, will be described only by way of nonlimiting example.

They are immersed in solutions containing aromatic substances along with substances having the function of disinfecting the oral cavity to combat the formation of bacterial plaque and therefore to prevent the formation of tartar.

In particular they are impregnated with chlorhexidine, a well known and valued disinfecting and antiplaque agent that assures complete hygiene.

After the absorbed substances have been stabilized, the toothpicks are then immersed in a solution that, when it has been absorbed and the solvent evaporated, gives rise to the formation of a very thin protective film.

This film, by the effect of mechanical removal due to the introduction of the tip of the toothpick in interstices 2, 2' and upon contact with saliva, is easily dissolved, thus allowing the release of the absorbed substances.

A very light layer of a special toothpaste containing fluorine and a slight abrasive is deposited on sides AB and CB (figure 4). This is aimed at making it possible, besides administration of fluorine and cleaning of the inter - dental space by removal of food residues, to "brush" the surface of the adjacent teeth.

Various substances can be used to make the toothpicks such as limewood, plastics or other materials, while the shape of the toothpicks and its section can vary while being compatible with what is claimed in the main claim (claim 1), always within the scope of protection on the patent.

Claims

1. Improved toothpick, characterized by a tip having cross sections (figure 4) such as to reproduce the cross sections of the interstices (2, 2') between the teeth and in that it is coated and impregnated, at least in its lower part (AC, figure 4) with scenting and medicinal substances and on its sides (AB-CB) with dentifrice substances containing fluorine and slightly abrasive, the entire unit, protected by a film, so that the introduction of the tip in the interstices between the teeth automatically, with the aid of saliva, removes the film and deposits a discrete quantity of scenting and/or concentrated medicinal, antiplaque and disinfecting substance, simultaneously, with the sides, performing the administration of fluorine to the neck of the teeth and providing their brushing.

2. Toothpick as in claim 1, wherein:
   - the section, in its back part (1) is rectangular and changes into substantially trapezoidal sections (1') decreasing with the curved sides (AB and CB) toward the tip;
   - the upper front part (B, E, F, figure 2) is concave and the lower front part (G, H, B) is curved upward.

3. Toothpick as in claims 1 and 2, wherein at least the base (AC, figure 4) of the tip is impregnated with chlorhexidine as the disinfection and antiplaque agent.

B

IV

E

H

IV

2    2

**Fig. 5**

F

2'    2'

G

**Fig.6**

1'

1

**Fig.1**    **Fig.2**

1'

1

**Fig. 3**

A

B

C

**Fig. 4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 135 528 (STARK)<br>* Column 1, lines 26-30; column 2, lines 55-57; figure 1 * | 1 | A 61 C 15/00 |
| Y | * Column 2, lines 3-18; figures 3,5 * | 2 | |
| | --- | | |
| Y | DE-A-2 629 043 (SCHMITT)<br>* Page 3, lines 27-30; page 4, lines 5-17 * | 1,2 | |
| | --- | | |
| A | FR-A-2 220 234 (HESSELGREN)<br>* Page 3, lines 21-27; page 4, lines 18-33 * | 1 | |
| | ----- | | |

| | | TECHNICAL FIELDS SEARCHED (Int. Cl. ³) |
|---|---|---|
| | | A 61 C |

The present search report has been drawn up for all claims

| Place of search | Date of completion of the search | Examiner |
|---|---|---|
| THE HAGUE | 13-04-1984 | KNAUER F.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03. 82